# EUROPÄISCHE PATENTANMELDUNG

(11) **EP 3 494 780 A1**
(43) Veröffentlichungstag der Anmeldung: **12.06.2019**
(21) Anmeldenummer: 17205903.2
(22) Anmeldetag: 07.12.2017
(51) Int. Cl.: A01K 11/00

(54) **VERFAHREN UND ANORDNUNG ZUR TIERIDENTIFIKATION**

(71) Anmelder: Siemens Aktiengesellschaft, 80333 München (DE)
(72) Erfinder: Baudisch, Thomas, 86938 Schondorf am Ammersee (DE); Falk, Rainer, 85586 Poing (DE); Renner, Jens, 91074 Herzogenaurach (DE); Sollacher, Rudolf, 84174 Eching (DE)

(57) **Zusammenfassung**

Erfindungsgemäß wird zur Identifikation eines Tiers (T) zunächst mittels eines ersten Sensors (C) geprüft, ob sich ein Körperteil des zu identifizierenden Tiers (T) in einer vorgegebenen Position (POS) befindet. Durch ein positives Prüfungsergebnis wird ein bildgebender Sensor (C) dazu veranlasst, ein Bild (PIC) der Nase (N) des Tiers (T) aufzunehmen. Erfindungsgemäß wird dann mittels eines Mustererkennungsverfahrens eine Textur (TEX) der Nase (N) auf dem aufgenommenen Bild (PIC) erkannt und extrahiert und dem Tier (T) anhand der extrahierten Nasentextur (TEX) eine eindeutige Kennung (UAID) zugeordnet.

## Beschreibung

In der professionellen oder privaten Tierhaltung ist es häufig notwendig oder zumindest wünschenswert Tiere eindeutig zu identifizieren. Zu diesem Zweck werden die Tiere häufig mit Kennzeichnungen versehen, wie z.B. Ohrclips, Fußringen, RFID-Tags, Halsbändern oder Brandmalen. Derartige Kennzeichnungen sind jedoch vorher anzubringen und können danach verlorengehen oder in unzulässiger Weise wiederverwendet werden.

Insbesondere bei Rindern und Schafen wird zur Identifikation häufig ein Nasenabdruck des Tiers verwendet. Das Erfassen eines solchen Nasenabdrucks ist jedoch verhältnismäßig aufwendig, insofern das Tier zunächst zu fixieren ist, die Nase zu säubern ist, Farbe auf die Nase aufzubringen ist und ein Abdruck der Nase zu nehmen ist.

Es ist Aufgabe der vorliegenden Erfindung, ein Verfahren sowie eine Anordnung zur Tieridentifikation anzugeben, die eine schnelle und zuverlässige Identifikation erlauben.

Gelöst wird diese Aufgabe durch ein Verfahren mit den Merkmalen des Patentanspruchs 1, durch eine Anordnung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Erfindungsgemäß wird zur Identifikation eines Tiers mittels eines ersten Sensors geprüft, ob sich ein Körperteil des zu identifizierenden Tiers in einer vorgegebenen Position befindet. Durch ein positives Prüfungsergebnis wird ein bildgebender Sensor dazu veranlasst, ein Bild einer Nase des Tiers aufzunehmen. Erfindungsgemäß wird dann mittels eines Mustererkennungsverfahrens eine Textur der Nase auf dem aufgenommenen Bild erkannt und extrahiert und dem Tier anhand der extrahierten Nasentextur eine eindeutige Kennung zugeordnet.

Als erster Sensor kann hierbei insbesondere ein Positionssensor, eine Lichtschranke, eine Waage, eine Kamera oder der bildgebende Sensor verwendet werden. Der Körperteil, dessen Position durch den ersten Sensor geprüft wird, kann insbesondere die Nase oder der Kopf des Tiers sein. Als bildgebender Sensor kann vorzugsweise eine optische Kamera, eine Infrarotkamera, eine Hyperspektralkamera und/oder ein Ultraschallsensor eingesetzt werden. Dabei können insbesondere eine oder mehrere 2D- oder 3D-Kameras verwendet werden.

Zum Ausführen des erfindungsgemäßen Verfahrens sind eine Anordnung zur Tieridentifikation, ein Computerprogrammprodukt, sowie ein computerlesbares Speichermedium vorgesehen.

Ein wesentlicher Vorteil der Erfindung ist darin zu sehen, dass durch die Erfassung einer Nasentextur, die als biometrisches Merkmal weitgehend manipulationssicher ist, mittels eines bildgebenden Sensors eine schnelle und gleichzeitig zuverlässige Identifikation des Tiers ermöglicht wird. Zudem kann eine Nasentextur auch bei moderater Verschmutzung der Nase durch geeignete bildverarbeitende Verfahren häufig noch mit hinreichender Zuverlässigkeit ermittelt werden.

Vorteilhafte Ausführungsformen und Weiterbildungen der Erfindung sind in den abhängigen Ansprüchen angegeben.

Nach einer vorteilhaften Ausführungsform der Erfindung können mehrere bildgebende Sensoren vorgesehen sein, die mehrere Bilder der Nase aus unterschiedlichen Richtungen aufnehmen. Die Nasentextur kann dann anhand der aus unterschiedlichen Richtungen aufgenommenen Bilder extrahiert werden. Insbesondere kann anhand der aus unterschiedlichen Richtungen aufgenommenen Bilder mit Standardmethoden der Bildauswertung ein hinreichend genaues Höhenprofil einer Oberfläche der Nase ermittelt werden, das als Nasentextur für das Tier im Allgemeinen charakteristisch ist. Durch eine Auswertung mehrerer Bilder kann zudem eine Erkennungssicherheit für die Nasentextur erhöht werden.

Vorteilhafterweise kann anhand eines aufgenommenen Bildes durch Vergleich mit vorgegebenen Nasenmerkmalen ein Teilbereich der Nase ermittelt werden, auf dem die Nasentextur optisch erfassbar ist. Die Nasentextur kann dann aus dem ermittelten Teilbereich extrahiert werden. Auf diese Weise kann insbesondere ein weniger verschmutzter Teilbereich der Nase identifiziert und/oder abgegrenzt werden. Die Nasenmerkmale können eine Struktur, Farbe und/oder eine Helligkeit der Nase betreffen.

Vorzugsweise kann ein Anteil des Teilbereichs an einer Gesamtfläche der Nase ermittelt werden und abhängig von diesem Anteil die Identifikation fortgesetzt, die Identifikation abgebrochen und/oder ein weiteres Bild aufgenommen werden. Insbesondere kann der ermittelte Anteil mit einem Schwellwert von z.B. 60% oder 80% verglichen werden und abhängig vom Vergleichsergebnis weiter verfahren werden.

Weiterhin können aus der Nasentextur durch das Mustererkennungsverfahren spezifische Texturmerkmale, wie z.B. Linien, Punkte und/oder Flächen extrahiert werden. Damit kann abhängig von einer Anzahl der extrahierten Texturmerkmale die Identifikation fortgesetzt, die Identifikation abgebrochen und/oder ein weiteres Bild aufgenommen werden. So kann beispielsweise vorgesehen sein, die Identifikation fortzusetzen, falls sechs oder mehr Texturmerkmale extrahiert werden konnten und andernfalls die Identifikation abzubrechen oder zu wiederholen.

Auf diese Weise kann in der Regel gewährleistet werden, dass die erfassten Texturmerkmale für eine eindeutige und zuverlässige Identifizierung ausreichen.

Nach einer vorteilhaften Weiterbildung der Erfindung kann durch einen weiteren Sensor eine am oder im Tier angebrachte

Kennzeichnung, wie z.B. eine Ohrenmarke und/oder ein RFID-Tag, erfasst werden und geprüft werden, ob die Kennzeichnung und die eindeutige Kennung demselben Tier zugeordnet sind. Auf diese Weise kann eine Identifizierungssicherheit erhöht werden, die angebrachte Kennzeichnung verifiziert werden und/oder deren Manipulation erkannt werden.

Ferner kann durch einen weiteren Sensor eine am oder im Tier angebrachte Kennzeichnung, wie z.B. eine Ohrenmarke und/oder ein RFID-Tag, erfasst werden und anhand der erfassten Kennzeichnung eine Referenztextur selektiert werden. Die selektierte Referenztextur kann dann mit der extrahierten Nasentextur verglichen werden und bei Übereinstimmung eine Referenzkennung der Referenztextur als eindeutige Kennung zugeordnet werden.

Darüber hinaus kann die extrahierte Nasentextur mit einer Vielzahl von Referenztexturen verglichen werden. Eine Referenzkennung einer mit der Nasentextur übereinstimmenden Referenztextur kann dann als eindeutige Kennung zugeordnet werden.

Nach einer weiteren vorteilhaften Weiterbildung der Erfindung kann ein Futterautomat durch ein positives Prüfungsergebnis des ersten Sensors, durch eine erfolgreiche Aufnahme des Bildes, durch eine erfolgreiche Erkennung oder Extraktion der Nasentextur und/oder durch eine erfolgreiche Zuordnung der Kennung dazu veranlasst werden, Futter für das Tier freizugeben. Vorzugsweise ist der bildgebende Sensor bei dem Futterautomaten angeordnet. Dies ist insofern vorteilhaft, als sich ein zu identifizierendes Tier meist von selbst zum Futterautomaten begibt und nicht aufwendig dorthin zu transportieren ist. Darüber hinaus lernt das Tier durch die an eine erfolgreiche Ausführung von Verfahrensschritten gekoppelte Futterfreigabe meist ohne weiteres Zutun, sich so zu positionieren, dass eine verlässliche Identifikation erfolgen kann.

Weiterhin kann der bildgebende Sensor bei einer Tränke angeordnet werden und durch den ersten Sensor geprüft werden, ob sich der Körperteil des Tiers bei der Tränke befindet. Dies ist insofern vorteilhaft, als durch das Wasser der Tränke die Nase des Tiers in der Regel gereinigt wird, so dass deren optische Strukturen besser erfassbar sind.

Gemäß einer weiteren vorteilhaften Weiterbildung der Erfindung können anhand der Kennung Angaben über das Tier aus einer Datenbank abgerufen werden, und das Tier kann abhängig von den abgerufenen Angaben behandelt werden. Die Angaben können insbesondere individuelle Daten über eine Historie, eine Herkunft, eine Aufzucht, eine Mast und/oder einen Transport des Tiers sowie Gesundheitsdaten, tierärztliche Behandlungsdaten, Daten über verabreichte Medikamente oder Impfungen sowie Versicherungsangaben beinhalten. Darüber hinaus können die Angaben Referenzbilder, insbes. Referenztexturen, daraus extrahierte Texturmerkmale sowie weitere Identifizierungsinformation, wie z.B. Kennungen von Ohrmarken oder RFID-Tags, umfassen. Abhängig von den Angaben kann beispielsweise gesteuert werden, welche Art und/oder welche Menge von Futter oder Medikamenten an das Tier ausgegeben wird.

Weiterhin können das Tier betreffende Daten erfasst werden. Die erfassten Daten und die Kennung können zu einer Datenbank übermittelt werden, wo der Kennung zugeordnete Angaben über das Tier anhand der erfassten Daten aktualisiert werden. Die zu aktualisierenden Daten können insbesondere Messwerte, wie z.B. Größe, Gewicht oder Körpertemperatur des Tiers, einen pH-Wert im Pansen oder eine aktuell erfasste Nasentextur umfassen. Eine Aktualisierung der gespeicherten Nasentexturen erhöht insbesondere eine Zuverlässigkeit der Identifikation, da z.B. altersbedingte Veränderungen der Nasentexturen bei zukünftigen Identifizierungen berücksichtigt werden können.

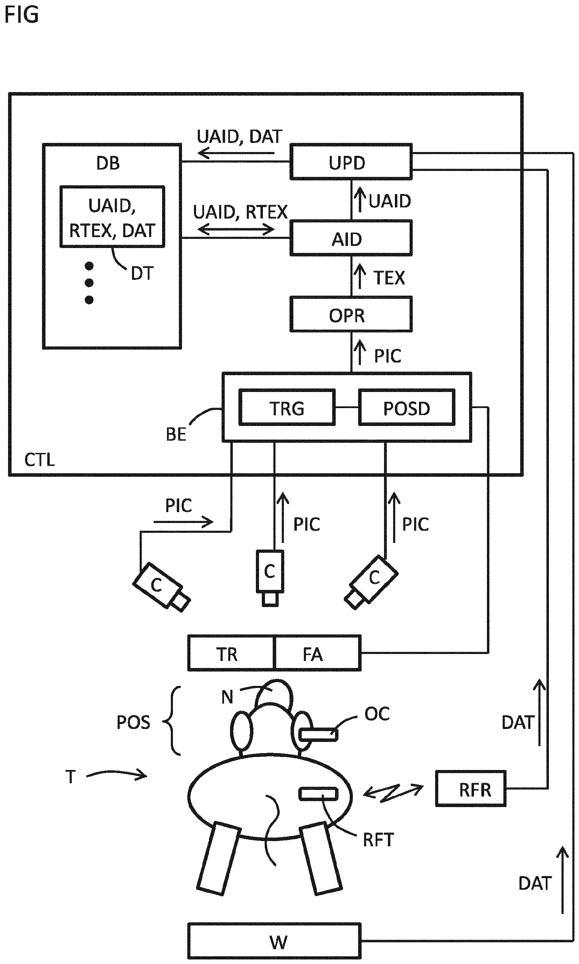

Ein Ausführungsbeispiel der Erfindung wird nachfolgend anhand der Zeichnung näher erläutert.
Die Figur zeigt eine erfindungsgemäße Anordnung zur Tieridentifikation in schematischer Darstellung.

In der Figur ist eine erfindungsgemäße Anordnung zur Identifikation eines Tiers T schematisch dargestellt. Das Tier T kann hierbei insbesondere ein Nutztier, wie z.B. ein Rind, ein Schaf, ein Schwein oder ein Pferd oder ein Wildtier oder ein Haustier sein. Zum Steuern der Tieridentifikation ist eine Steuereinrichtung CTL vorgesehen, an die mehrere Kameras C, ein Futterautomat FA, eine Waage W sowie ein RFID-Leser RFR (RFID: Radio Frequency Identification) angekoppelt sind.

Die Kameras C haben als bildgebende Sensoren im Rahmen der Tieridentifikation unterschiedliche Funktionen. Insbesondere dienen die Kameras C zum Aufnehmen von Bildern PIC einer Nase N des Tiers T aus unterschiedlichen Richtungen. Zu diesem Zweck sind die Kameras C um eine vorgegebene Position POS für einen Kopf oder die Nase N des Tiers herum angeordnet. Die Position POS ist derart vorgegeben, dass strukturreiche Bilder PIC der Nase N und vorzugsweise auch Bilder eines am Tier T angebrachten Ohrclips OC aufgenommen werden können. Als bildgebende Sensoren C können insbesondere Kameras für sichtbares Licht, Infrarotkameras, Hyperspektralkameras und/oder Ultraschallsensoren verwendet werden. Dabei können 2D- oder 3D-Kameras eingesetzt werden.

Die Kameras C fungieren im vorliegenden Ausführungsbeispiel weiterhin als Positionssensoren, um festzustellen, ob sich der Kopf, die Nase N oder ein anderer Körperteil des Tiers T in der vorgegeben Position POS befindet. Zu diesem Zweck werden ein oder mehrere von den Kameras C aufgenommene Bilder zu einem Bilderfassungsmodul BE der Steuereinrichtung CTL übermittelt. Das Bilderfassungsmodul BE verfügt über eine Positionsdetektion POSD, die anhand der aufgenommenen Bilder prüft, ob sich der Kopf, die Nase N und/oder ein anderer Körperteil des Tiers T in der vorgegebenen Position POS befinden. Infolge eines positiven Prüfungsergebnisses werden die Kameras C durch einen Auslöser TRG des Bilderfassungsmoduls BE dazu veranlasst, die Bilder PIC der Nase N aus unterschiedlichen Richtungen aufzunehmen. Der Auslöser TRG ist hierzu mit der Positionsdetektion POSD gekoppelt.

Weiterhin veranlasst der Auslöser TRG infolge des positiven Prüfungsergebnisses einen mit dem Bilderfassungsmodul BE gekoppelten Futterautomaten FA dazu, nach einer erfolgreichen Bildaufnahme oder einer erfolgreichen Identifikation Futter für das Tier T freizugeben. Die Kameras C sind vorzugsweise bei oder in der Nähe des Futterautomaten FA angeordnet. Dies ist insofern vorteilhaft, als sich ein jeweiliges Tier T in der Regel von selbst zum Futterautomaten FA begibt und damit ohne weiteren Transportaufwand identifiziert werden kann. Darüber hinaus lernt das Tier T durch die an eine erfolgreiche Bildaufnahme oder Identifizierung geknüpfte Futterfreigabe meist ohne weiteres Zutun, sich so zu positionieren, dass eine verlässliche Identifizierung erfolgen kann. Entsprechend wird als Position POS für die Auslösung der Bildaufnahmen vorzugsweise diejenige Stellung des Kopfes oder der Nase N des Tiers T vorgegeben, die das Tier T typischerweise vor einem Futterautomaten einnimmt.

Beim Futterautomaten FA und damit bei den Kameras C ist weiterhin eine Tränke TR angeordnet. Dies ist insofern vorteilhaft, als die Nase N des Tiers T durch das Wasser der Tränke TR in der Regel gesäubert wird, so dass deren optische Strukturen durch die Kameras C besser erfassbar sind.

Vorteilhafterweise können die Kameras C auch beweglich angeordnet sein und abhängig von einer ermittelten Position oder Stellung des Tiers T in für eine Aufnahme geeignete Stellungen um den Kopf oder die Nase N des Tiers T bewegt werden.

Alternativ oder zusätzlich kann eine Lichtschranke als Positionssensor oder die Waage W als Sensor dafür, dass sich das Tier T in einer für die Aufnahme der Nase N geeigneten Position befindet, dienen. Entsprechend können die Aufnahmen der Bilder PIC durch die Lichtschranke bzw. die Waage W ausgelöst werden.

Die aufgenommenen Bilder PIC der Nase N werden durch das Bilderfassungsmodul BE erfasst und zu einem mit dem Bilderfassungsmodul BE gekoppelten optischen Mustererkenner OPR der Steuereinrichtung CTL übermittelt.

Der optische Mustererkenner OPR ermittelt aus den aus unterschiedlichen Richtungen aufgenommenen Bildern PIC ein Höhenprofil einer Oberfläche der Nase N und erkennt und extrahiert daraus eine Textur TEX der Nase N. Die Nasentextur TEX entspricht im Wesentlichen einem auf herkömmliche Weise abgenommenen Nasenabdruck und ist ein individuelles, weitgehend fälschungssicheres biometrisches Merkmal des Tiers T.

Zur Erkennung und Extraktion der Nasentextur TEX ist eine Vielzahl von optischen Mustererkennungsverfahren verfügbar, z.B. Verfahren zur biometrischen Nutzerauthentifizierung bei Mobiltelefonen.

Im vorliegenden Ausführungsbeispiel werden durch den optischen Mustererkenner OPR Bildmerkmale der aufgenommenen Bilder PIC mit vorgegebenen Nasenmerkmalen verglichen und abhängig davon ein Teilbereich der Nase N ermittelt, auf dem die Nasentextur TEX optisch erfassbar ist und nicht durch Verschmutzung oder andere Hindernisse verdeckt ist. Im weiteren Identifikationsverfahren wird dann nur die aus dem ermittelten Teilbereich extrahierte Nasentextur TEX weiterverwendet. Die vorgegebenen Nasenmerkmale können z.B. eine Helligkeit, eine Farbe und/oder eine Struktur der Nase N betreffen.

Vorzugsweise kann durch den optischen Mustererkenner OPR ein Anteil des Teilbereichs an einer Gesamtfläche der Nase N ermittelt werden und abhängig davon die Identifikation fortgesetzt, die Identifikation abgebrochen oder ein weiteres Bild aufgenommen werden. Insbesondere kann dabei der ermittelte Anteil mit einem Schwellwert von z.B. 60% oder 80% verglichen werden und nur bei dessen Überschreitung die Identifikation fortgesetzt werden. Alternativ oder zusätzlich können durch den optischen Mustererkenner OPR spezifische Texturmerkmale der Nase N, z.B. Linien, Punkte und/oder Flächen erkannt und extrahiert werden und abhängig von einer Anzahl der extrahierten Texturmerkmale die Identifikation fortgesetzt, die Identifikation abgebrochen oder ein weiteres Bild aufgenommen werden. Hierbei kann z.B. vorgesehen sein, dass die Identifikation nur fortgesetzt wird, wenn sechs oder mehr derartige Texturmerkmale extrahiert werden konnten.

Die extrahierte Nasentextur TEX wird vom optischen Mustererkenner OPR zu einem mit diesem gekoppelten Tieridentifizierungsmodul AID der Steuereinrichtung CTL übermittelt. Das Tieridentifizierungsmodul AID dient zum Identifizieren und Authentifizieren des Tiers T anhand seiner Nasentextur TEX.

Das Tieridentifizierungsmodul AID ist mit einer Datenbank DB der Steuereinrichtung CTL gekoppelt. In der Datenbank DB ist für eine Vielzahl von Tieren jeweils ein sogenannter digitaler Zwilling DT gespeichert, in dem vorzugsweise alle relevanten Daten über das jeweilige Tier zusammengeführt werden. Ein jeweiliger digitaler Zwilling DT ist einem jeweiligen Tier individuell zugeordnet und enthält eine eindeutige Referenzkennung UAID (Universel Animal Identification) des jeweiligen Tiers, mindestens eine Referenztextur RTEX der Nase des jeweiligen Tiers sowie weitere Angaben DAT über das jeweilige Tier. Die Referenztexturen RTEX und die Angaben DAT der digitalen Zwillinge DT können insbesondere in einer Blockchain manipulationssicher gespeichert werden. Eine jeweilige Referenztextur RTEX kann z.B. in Form eines oder mehrerer Referenzbilder der Nase des jeweiligen Tiers oder in Form von extrahierten Bildmerkmalen oder Merkmalsvektoren gespeichert werden. Im vorliegenden Ausführungsbeispiel wird die Referenzkennung UAID als eindeutige Kennung des jeweiligen Tiers T verwendet.

Die Angaben DAT über ein jeweiliges Tier T sind jeweils der Kennung UAID und damit diesem jeweiligen Tier T individuell zugeordnet. Die Angaben DAT können insbesondere Angaben über eine Historie des Tiers T, Daten über seine Herkunft, seine Aufzucht, seine Mast und/oder seinen Transport umfassen. Darüber hinaus können Gesundheitsdaten, tierärztliche Behandlungsdaten, Daten über verabreichte Medikamente oder empfangene Impfungen, Versicherungsangaben, Angaben über Menge, Art und/oder Verabreichung von Futter sowie Daten über zu verabreichende Medikamente enthalten sein.

Durch das Tieridentifizierungsmodul AID wird die extrahierte Nasentextur TEX des Tiers T mit den in der Datenbank DB gespeicherten Referenztexturen RTEX der digitalen Zwillinge DT verglichen. Bei hinreichender Übereinstimmung einer der Referenztexturen RTEX mit der extrahierten Nasentextur TEX wird die der übereinstimmenden Referenztextur zugeordnete Referenzkennung UAID dem Tier T als eindeutige Kennung zugeordnet und das Tier T damit identifiziert und/oder authentifiziert.

Gemäß dem vorliegenden Ausführungsbeispiel wird durch einen weiteren Sensor der Ohrclip OC oder eine andere am oder im Tier angebrachte Kennzeichnung erfasst und daraus ein spezifisches Kennzeichen, z.B. eine Zeichenkombination als weitere Identifizierungsinformation extrahiert.

Als weiterer Sensor können insbesondere eine oder mehrere der Kameras C fungieren. So kann von einem durch eine Kamera C aufgenommenen Bild des Ohrclips OC eine darauf angebrachte individuelle Zeichenkombination mittels des optischen Mustererkenners OPR erkannt und extrahiert werden. Alternativ oder zusätzlich können ein oder mehrere am Ohrclip OC, an einem Halsband oder am oder im Tier angebrachte RFID-Tags durch einen RFID-Leser ausgelesen werden, um ein spezifisches Kennzeichen zu extrahieren. Nach Extraktion des spezifischen Kennzeichens kann geprüft werden, ob dieses und die ermittelte eindeutige Kennung demselben Tier T zugeordnet sind oder nicht. Falls nicht, kann eine Warnung über eine misslungene Authentifizierung ausgegeben werden. Auf diese Weise kann geprüft werden, ob eine manipulierbare Kennzeichnung wie z.B. der Ohrclip OC unzulässigerweise an einem anderen Tier angebracht wurde. Eine solche Warnung kann auch ausgegeben werden, wenn eine dem spezifischen Kennzeichen in der Datenbank DB zugeordnete Referenztextur RTEX nicht mit der erfassten Nasentextur TEX übereinstimmt.

Durch die zusätzliche Überprüfung von am Tier T angebrachten Kennzeichnungen, hier dem Ohrclip OC, und deren Abgleich mit den erfassten biometrischen Merkmalen, hier der Nasentextur TEX, kann eine Identifizierungssicherheit erheblich gesteigert werden. Darüber hinaus können unzulässige Manipulationen leichter erkannt werden.

Sobald das Tier T erfolgreich identifiziert oder authentifiziert ist, können anhand der Kennung UAID aus der Datenbank DB die Angaben DAT des identifizierten Tiers T abgerufen werden und dieses abhängig davon behandelt werden. So kann z.B. abhängig von den abgerufenen Angaben DAT eine Menge, eine Art und/oder eine Verabreichungsweise von Medikamenten oder des durch den Futterautomaten FA auszugebenden Futters gesteuert werden.

Weiterhin verfügt die Steuereinrichtung CTL über ein mit der Datenbank DB und dem Tieridentifizierungsmodul AID gekoppeltes Datenaktualisierungsmodul UPD. Letzteres dient zur Aktualisierung des digitalen Zwillings DT eines jeweils identifizierten Tiers T in der Datenbank DB und insbesondere der Aktualisierung der Angaben DAT über dieses Tier T.

Im Rahmen der Identifizierung des Tiers T wird die ermittelte Kennung UAID vom Tieridentifizierungsmodul AID zum Datenaktualisierungsmodul UPD übertragen, das anhand der Kennung UAID auf den durch diese Kennung UAID identifizierten digitalen Zwilling DT des Tiers T zugreift.

Im vorliegenden Ausführungsbeispiel wird im Zusammenhang mit der Tieridentifizierung ein Gewicht des Tiers T durch die Waage W gemessen. Weiterhin wird durch den RFID-Leser RFR von einem im Pansen des Tieres T befindlichen RFID-Tag RFT, einem sogenannten Pansen-Tag, ein pH-Wert im Pansen ausgelesen. Die Waage W und der RFID-Leser RFR sind mit den Datenaktualisierungsmodul UPD gekoppelt und übertragen das gemessenen Gewicht sowie den gemessenen pH-Wert als aktuelle Angaben DAT zum Datenaktualisierungsmodul UPD. Das Datenaktualisierungsmodul UPD überträgt die gemessenen Angaben DAT zusammen mit der Kennung UAID als Zugriffsinformation zur Datenbank DB und veranlasst dadurch eine Aktualisierung der im digitalen Zwilling DT des identifizierten Tiers T gespeicherten Angaben DAT. Analog dazu kann auch eine Körpertemperatur des Tiers T, z.B. mittels einer Infrarotkamera gemessen und im digitalen Zwilling DT des Tiers T hinterlegt werden.

## Patentansprüche

1. Verfahren zur Tieridentifikation, wobei
a) mittels eines ersten Sensors (C) geprüft wird, ob sich ein Körperteil eines zu identifizierenden Tiers (T) in einer vorgegebenen Position (POS) befindet,
b) ein bildgebender Sensor (C) durch ein positives Prüfungsergebnis dazu veranlasst wird, ein Bild (PIC) einer Nase (N) des Tiers (T) aufzunehmen,
c) mittels eines Mustererkennungsverfahrens eine Textur (TEX) der Nase (N) auf dem aufgenommenen Bild (PIC) erkannt und extrahiert wird, und
d) dem Tier (T) anhand der extrahierten Nasentextur (TEX) eine eindeutige Kennung (UAID) zugeordnet wird.

2. Verfahren nach Anspruch 1, **dadurch gekennzeichnet,**
**dass** mehrere bildgebende Sensoren (C) vorgesehen sind,
**dass** durch die bildgebenden Sensoren (C) mehrere Bilder (PIC) der Nase (N) aus unterschiedlichen Richtungen aufgenommen werden, und
**dass** die Nasentextur (TEX) anhand der aus unterschiedlichen Richtungen aufgenommenen Bilder (PIC) extrahiert wird.

3. Verfahren nach einem der vorhergehenden Ansprüche, **dadurch gekennzeichnet,**
**dass** anhand des aufgenommenen Bildes (PIC) durch Vergleich mit vorgegebenen Nasenmerkmalen ein Teilbereich der Nase (N) ermittelt wird, auf dem die Nasentextur (TEX) optisch erfassbar ist, und
**dass** die Nasentextur (TEX) aus dem ermittelten Teilbereich extrahiert wird.

4. Verfahren nach Anspruch 3, **dadurch gekennzeichnet,**
**dass** ein Anteil des Teilbereichs an einer Gesamtfläche der Nase (N) ermittelt wird, und
**dass** abhängig von diesem Anteil die Identifikation fortgesetzt, die Identifikation abgebrochen oder ein weiteres Bild (PIC) aufgenommen wird.

5. Verfahren nach einem der vorhergehenden Ansprüche, **dadurch gekennzeichnet,**
**dass** aus der Nasentextur (TEX) durch das Mustererkennungsverfahren spezifische Texturmerkmale extrahiert werden, und dass abhängig von einer Anzahl der extrahierten Texturmerkmale die Identifikation fortgesetzt, die Identifikation abgebrochen oder ein weiteres Bild (PIC) aufgenommen wird.

6. Verfahren nach einem der vorhergehenden Ansprüche, **dadurch gekennzeichnet,**
**dass** durch einen weiteren Sensor (C) eine am oder im Tier (T) angebrachte Kennzeichnung (OC) erfasst wird, und
**dass** geprüft wird, ob die Kennzeichnung (OC) und die eindeutige Kennung (UAID) demselben Tier (T) zugeordnet sind.

7. Verfahren nach einem der vorhergehenden Ansprüche, **dadurch gekennzeichnet,**
**dass** durch einen weiteren Sensor (C) eine am oder im Tier (T) angebrachte Kennzeichnung (OC) erfasst wird,
**dass** anhand der erfassten Kennzeichnung (OC) eine Referenztextur (RTEX) selektiert wird,
**dass** die selektierte Referenztextur (RTEX) mit der extrahierten Nasentextur (TEX) verglichen wird, und
**dass** bei Übereinstimmung eine Referenzkennung der Referenztextur (RTEX) als eindeutige Kennung (UAID) zugeordnet wird.

8. Verfahren nach einem der vorhergehenden Ansprüche, **dadurch gekennzeichnet,**
**dass** die extrahierte Nasentextur (TEX) mit einer Vielzahl von Referenztexturen (RTEX) verglichen wird, und
**dass** eine Referenzkennung einer mit der Nasentextur (TEX) übereinstimmenden Referenztextur (RTEX) als eindeutige Kennung (UAID) zugeordnet wird.

9. Verfahren nach einem der vorhergehenden Ansprüche, **dadurch gekennzeichnet, dass**
ein Futterautomat (FA) durch ein positives Prüfungsergebnis des ersten Sensors (C), durch eine erfolgreiche Aufnahme des Bildes (PIC), durch eine erfolgreiche Erkennung oder Extraktion der Nasentextur (TEX) und/oder durch eine erfolgreiche Zuordnung der Kennung (UAID) dazu veranlasst wird, Futter für das Tier (T) freizugeben.

10. Verfahren nach einem der vorhergehenden Ansprüche, **dadurch gekennzeichnet,**
**dass** der bildgebende Sensor (C) bei einer Tränke (TR) angeordnet ist, und
**dass** durch den ersten Sensor (C) geprüft wird, ob sich der Körperteil des Tiers (T) bei der Tränke (TR) befindet.

11. Verfahren nach einem der vorhergehenden Ansprüche, **dadurch gekennzeichnet,**
**dass** anhand der Kennung (UAID) Angaben (DAT) über das Tier (T) aus einer Datenbank (DB) abgerufen werden, und
**dass** das Tier (T) abhängig von den abgerufenen Angaben (DAT) behandelt wird.

12. Verfahren nach einem der vorhergehenden Ansprüche, **dadurch gekennzeichnet,**
**dass** das Tier (T) betreffende Daten (DAT) erfasst werden, dass die Kennung (UAID) und die erfassten Daten (DAT) zu einer Datenbank (DB) übermittelt werden, und
**dass** in der Datenbank (DB) der Kennung (UAID) zugeordnete Angaben (DAT) über das Tier (T) anhand der erfassten Daten (DAT) aktualisiert werden.

13. Anordnung zur Tieridentifikation, eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12.

15. Computerlesbares Speichermedium mit einem Computerprogrammprodukt nach Anspruch 14.
